**Europäisches Patentamt**

**European Patent Office**

**Office européen des brevets**

(11) Veröffentlichungsnummer: **0 016 253**
**B1**

(12) **EUROPÄISCHE PATENTSCHRIFT**

(19)

(45) Veröffentlichungstag der Patentschrift:
**27.10.82**

(21) Anmeldenummer: **79104568.5**

(22) Anmeldetag: **19.11.79**

(51) Int. Cl.³: **B 29 H 7/22**

(54) Verfahren zum Herstellen von endlosen Antriebsriemen.

(30) Priorität: **17.03.79 DE 2910636**

(43) Veröffentlichungstag der Anmeldung:
**01.10.80 Patentblatt 80/20**

(45) Bekanntmachung des Hinweises auf die Patenterteilung:
**27.10.82 Patentblatt 82/43**

(84) Benannte Vertragsstaaten:
**AT BE DE FR GB IT SE**

(56) Entgegenhaltungen:
**GB-A-875 283**
**US-A-2 573 642**
**US-A-2 573 643**
**US-A-2 600 775**
**US-A-2 671 244**
**US-A-4 137 787**

(73) Patentinhaber: **Continental Gummi-Werke Aktiengesellschaft, Königsworther Platz 1 Postfach 169, D-3000 Hannover 1 (DE)**

(72) Erfinder: **Menell, Hans, Hermann-Löns-Weg 4, D-3000 Hannover 91 (DE)**

Verfahren zum Herstellen von endlosen Antriebsriemen

Die Erfindung bezieht sich auf Verfahren zum Herstellen von Längsrippen auf ihrem Innenumfang aufweisenden endlosen Antriebsriemen aus natürlichem oder synthetischem Kautschuk mit in Längsrichtung oder im wesentlichen in Längsrichtung durchlaufenden eingebetteten fadenförmigen Festigkeitsträgern aus synthetischen Polymeren, wobei ein Rohling in umgekehrter Schichtenfolge aufgebaut, in einer Außenform ausgeformt und vulkanisiert wird und anschließend die Riemen in ihren Gebrauchszustand gewendet werden.

Im Gegensatz zu Zahnriemen, die sich aufgrund ihrer quer ausgerichteten Verzahnung selbst in längeren Wickeln verhältnismäßig leicht in Axialrichtung von dem zum Vulkanisieren verwendeten inneren Formkern abziehen lassen und die daher auch schon als Rohlinge mit einer dem Gebrauchszustand entsprechenden von innen nach außen fortschreitenden Schichtenfolge aufgebaut werden können, bieten die mit längs durchlaufenden Verrippungen ausgebildeten Rillenriemen, Mehrfach-Keilriemen u. dgl. das Problem des Entformens ohne Durchmessererweiterungen und daraus folgende schädliche Zerrungen. Es hat sich eingebürgert, diese Schwierigkeiten durch Aufbauen der Riemenrohlinge in Rückenlage, das heißt in einer von außen nach innen fortschreitenden umgekehrten Schichtenfolge aufzubauen und die fertigvulkanisierten, gegebenenfalls erst auf ihre vorgesehene Breite zugeschnittenen Riemen anschließend zu wenden — ein in der Praxis mit »Krempeln« bezeichneter Vorgang. Das Ausformen der Längsrippen oder -rillen und das Vulkanisieren muß in diesem Falle in einer Außenform vorgenommen werden. Einer solchen Außenform können die fertigen Riemen zwar ohne besondere Schwierigkeiten entnommen werden, problematisch gestaltet sich dagegen das Einbringen der vorbereiteten Rohlinge. Es ist Aufgabe der Erfindung, das Einbringen der Rohlinge in die Außenform zu vereinfachen und die Voraussetzungen zum wirtschaftlichen Herstellen hochwertiger Präzisionsriemen mit vermindertem Ausschußanteil zu schaffen.

Nach der Erfindung ist für Verfahren der eingangs genannten Art vorgesehen, daß der Rohling mit einem dem kleinsten Innendurchmesser der Außenform entsprechenden Außendurchmesser aufgebaut, in der Form unter plastischem Recken der Festigkeitsträger aufgeweitet und vulkanisiert und anschließend im gereckten Zustand der Festigkeitsträger abgekühlt wird.

Die Erfindung vermeidet den sonst notwendigen konstruktiven Aufwand für segmentartig zusammengesetzte mehrteilige Formen, indem sie die besonderen thermisch fixierbaren Dehnungseigenschaften synthetischer Faserwerkstoffe, wie beispielsweise Polyamid oder Polyester, zum Herbeiführen von Durchmesseränderungen ausnutzt. Die im Vergleich zu ihrem endgültigen Fertigungszustand zunächst mit Untermaß hergestellten Rohlinge lassen sich ohne weitere Vorarbeiten unmittelbar in die Vulkanisierform einbringen. Mit dem Aufweiten nicht zuletzt auch unter dem Einfluß der Wärmeeinwirkung und dem vollständigen Ausformen der Rohlinge innerhalb der Form erfahren die Festigkeitsträger eine noch im plastischen Bereich liegende Teilverstreckung, die über die Dauer der Vulkanisation erhalten bleibt und in der nachfolgenden Abkühlphase fixiert wird. Die Abkühlung wird zweckmäßig bis unter die sogenannte Erweichungs- bzw. Einfriertemperatur des Faserwerkstoffes getrieben, das heißt bis auf eine Temperatur, bei der die eingestellte Gefügestruktur unter Beseitigung aller mechanischen Spannungen erhalten bleibt. Die fertig vulkanisierten Riemen werden daher mit dem genauen Endmaß der Form entnommen und brauchen nach dem Abstechen von dem Gesamtwinkel nur noch gekrempelt zu werden.

**Patentanspruch**

Verfahren zum Herstellen von Längsrippen auf ihrem Innenumfang aufweisenden endlosen Antriebsriemen aus natürlichem oder synthetischem Kautschuk mit in Längsrichtung oder im wesentlichen in Längsrichtung durchlaufenden eingebetteten fadenförmigen Festigkeitsträgern aus synthetischen Polymeren, wobei ein Rohling in umgekehrter Schichtenfolge aufgebaut, in einer Außenform ausgeformt und vulkanisiert wird und anschließend die Riemen in ihren Gebrauchszustand gewendet werden, dadurch gekennzeichnet, daß der Rohling mit einem dem kleinsten Innendurchmesser der Außenform entsprechenden Außendurchmesser aufgebaut, in der Form unter plastischem Recken der Festigkeitsträger aufgeweitet und vulkanisiert und anschließend im gereckten Zustand der Festigkeitsträger abgekühlt wird.

**Claim**

A method for producing endless rubber drive belts having longitudinal ribs on their inner periphery and having embedded filiform strength carriers of synthetic polymers extending at least substantially in a longitudinal direction of the belts, in which a raw belt is built up in a reverse layer sequence, formed to its final shape and vulcanized in an external mould and afterwards reversed to a condition ready for use, characterized in that the raw belt is built up with an outer diameter corresponding to the minimum inner diameter of the external mould, expanded within said mould while subjecting the strength carriers to plastic stretching, vulcanized and afterwards cooled with said strength carriers being maintained in their stretched condition.

## Revendication

Procédé de fabrication des courroies de transmission sans fin en caoutchouc naturel ou synthétique présentant des nervures longitudinales sur toute leur périphérie interne et comprenant une armature noyée d'éléments filiformes s'étendant de préférence en direction longitudinale, une ébauche étant confectionée dans une succession inversée de couches, donc avec le profil nervuré orienté vers l'extérieur, amenée dans un moule extérieur et moulée et vulcanisée dans ce dernier, les courroies étant alors retroussées dans leur position d'utilisation, caractérisé en ce que l'ébauche est confectionée avec un diamètre externe correspondant au diamètre interne le plus petit du moule extérieur, élargie dans le moule en soumettant les éléments filiformes à une extension plastique, vulcanisée et puis rafraichie en retenissant les éléments filiformes dans leur condition extendue.